# EUROPEAN PATENT APPLICATION

(11) **EP 4 169 476 A1**
(43) Date of publication of application: **26.04.2023**
(21) Application number: 21828229.1
(22) Date of filing: 15.06.2021
(51) Int. Cl.: A61C 8/00, A61C 3/00

(54) **SCREWED ANGLED PEG**

(30) Priority: 22.06.2020 BR 202020012753 U
(71) Applicant: Implacil de Bortoli Material Odontológico S.A., 01521-020 São Paulo (BR)
(72) Inventor: RICARDO MAGNANI FORTUNATO, José, São Paulo - SP (BR); DE BORTOLI JUNIOR, Nilton, 04608-001 São Paulo (BR)
(74) Representative: Lavoix
(86) International application number: PCT/BR2021/050260
(87) International publication number: WO 2021/258171

(57) **Abstract**

The present Utility Model refers to a new functional perspective applied to the prosthetic component called "SCREWED ANGLED TRUNNION" developed in light of the need to enable screw-fastening of dental prostheses be they unitary or multiple; characterized by applying an inner thread in its upper part, which may be made of grade 1, 2, 4, and 5 titanium or else made of any other material as may be used in the creation of dental prosthesis components, whereby enabling a further choice in the form of coupling the implant fixed thereto, and may be manufactured for CM, EH and IH fittings or any other fitting forms as may be developed, promoting and facilitating the maintenance process thereof in view of the possibility of threading, contributing to reduce the build-up of residues and consequently reducing the possibility of inflammation at the base of the implants.

## Description

### FIELD OF THE INVENTION

The need to replace lost teeth for the most varied reasons has meant that dental implants have developed various implant systems and many types of connections that are screwed onto these implants with the purpose of fastening the prosthesis (denture), said connections being referred to as "prosthetic components".

Prosthetic components used in implants are elements that when screwed onto the implant enable the prosthesis to be fastened. Some of the criteria that must be observed when choosing these components are: gum tissue, interocclusal space, slant of the implants, whether the prosthesis will be cemented or screwed, unitary or multiple and at the end; the set that will best result in a plausible aesthetic that is closest to the original set of teeth.

The analysis of certain factors, such as those above, will indicate to the professional in the field which type of restoration is most suitable for each case.

The present Utility Model refers to the development of a prosthetic component, for unitary or multiple restoration, called "SCREWED ANGLED TRUNNION", idealized for the MT (Morse Taper), EH (External Hexagon) and IH (Internal Hexagon) fittings which are the systems most used today, among others already developed. The objective of this patent is to provide the professional with the option of screwing and/or gluing/cementing the prosthesis, in this angled trunnion, whereby filling the gap existing in the form of fastening for this type of pillar, which today only exists for the gluing/cementing option.

It can be made of grade 1, 2, 4, and 5 titanium or of any other material as may be used in the generation of dental prosthesis components.

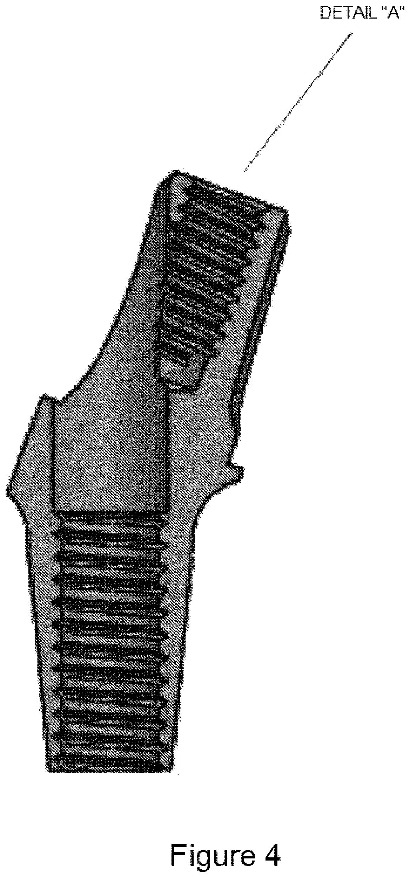

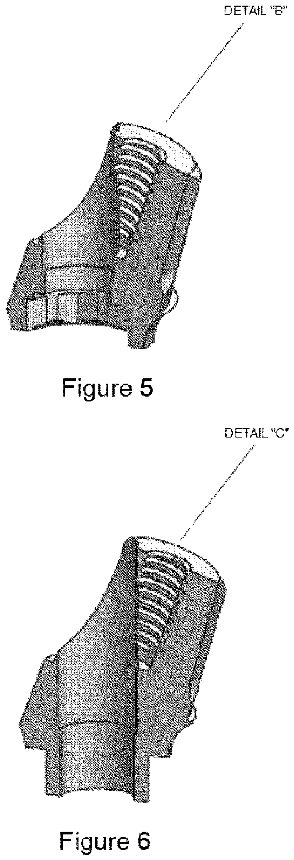

The object of the present application is the development of the angled trunnion with an inner thread in its upper part, details "A", "B" and "C" in FIGURES 4, 5 and 6 for the MT (Morse Taper), EH (External Hexagon) and IH (Internal Hexagon) fittings, respectively. These details cross-sectionally demonstrate the introduction of the inner thread of the component, where the prosthesis can be screwed, not preventing it from being glued/cemented, should this be the fastening option chosen by the dentist.

### BACKGROUND OF THE INVENTION

Traditionally, angled trunnions are utilized in cases where the purpose is to correct the angulation of the implant which for some reason is not positioned suitably for placing the prosthesis (tooth or set of teeth).

The angled trunnions existing today are solely fastened by cementing (glued with cement) or fastened with another type of adhesive.

Gluing by cementing as a means of fastening ultimately limits re-utilization of the prosthesis, when the need arises for maintenance thereof.

Today, in most cases, during the maintenance process, it is commonplace, due to the difficulty thereof, to lose the prosthesis and the original trunnion, bringing serious inconvenience for the patient, leaving no other alternative to correct said problem than to replace said angled trunnion cemented for another equivalent one and in such cases ultimately result in major hardship in positioning and adjustment of this new trunnion.

Such situation triggers financial losses and major discomfort to the patient undergoing treatment.

Observing the problems referred to has given rise to the development of the **"SCREWED ANGLED TRUNNION",** the objective of which is to meet the need of professionals to have the option of screwing the prosthesis.

Numerous studies and much research have been carried out to detect the ideal minimum angle necessary for making an inner thread in the upper part of the angled trunnion, making it possible to screw the prosthesis element.

### DETAILED DESCRIPTION OF THE INVENTION

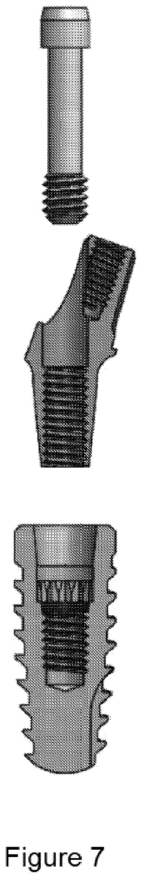

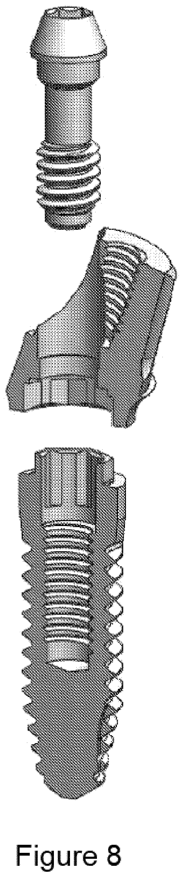

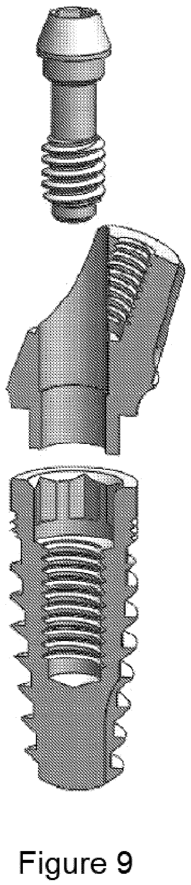

The **"SCREWED ANGLED TRUNNION"** can be made with the MT (Morse Taper), EH (External Hexagon) and IH (Internal Hexagon) fitting, as described in FIGURES 7, 8 and 9, which cross-sectionally shows the assembly sequence of the **"SCREWED ANGLED TRUNNION"** up to the positioning for fitting the implant, for these systems, which are the ones most used today, among others.

Its bottom base is manufactured such that it can be adapted to the type of implant utilized (CM, EH and IH), the form of fitting the **"SCREWED ANGLED TRUNNION"** in the implant may be produced such that it makes the prosthesis element on the implant rotational or anti-rotational. Its diameters are relative to the laying platforms of the implants, which may be commercialized in the following sizes: 3.5mm; 4.0mm; 4.5mm and 5.0mm, which are the most common, and may also adapt to other platform diameters as may be needed and/or developed.

The thread of the fastening screw of the **"SCREWED ANGLED TRUNNION"** on the 3.5mm platform implants may be M1.8 and for 4.0mm and 5.0mm implants they may be M2.0, these being the sizes most utilized, though they may vary according to each project.

Some reasons are essential in analyzing the option for a **"SCREWED ANGLED TRUNNION"** when compared to the cemented angled trunnion and will be explained ahead.

After placing/performing maintenance on the prosthesis, the need may arise to make certain adjustments, for example: replace the prosthesis, or some prosthesis element. A screwed prosthesis enables replacement by simple withdrawal of the screws and replacing the already repaired element. When the prosthesis is cemented, the difficulty to repair is much greater, and furthermore may lead to the loss of the prosthetic element, as mentioned previously.

Another important benefit of the screwed prosthesis, is the decrease in the risk of losing the implant by contamination. During the process of cementing or any other type of gluing, this cement or glue may penetrate into the region of the soft tissue (gums), and may induce inflammation and consequently cause the loss of the implant.

Other notable characteristics of the "SCREWED ANGLED TRUNNION" are:
- Easy maintenance of the prosthesis elements on the implants installed and in visualizing the implants already installed;
- Decrease in the build-up of residue of biological material on the soft tissue which ultimately prevents inflammation, swelling and the potential loss of the implant; and
- Multifold aesthetic improvements.

### BRIEF DESCRIPTION OF THE DRAWINGS

We shall now describe the prosthetic component called "SCREWED ANGLED TRUNNION" for improved understanding as a whole:
FIGURES 4, 5 and 6 present, according to variations of the fittings (CM, HE and IH), side view of the "SCREWED ANGLED TRUNNION", indicated by the Details "A", "B" and "C" the place of the position of the "inner thread", being the site where the prosthesis will be screwed.
FIGURES 7, 8 and 9, describe the assembly sequence on the MT (Morse Taper), EH (external hexagon) and IH (internal hexagon) implants and in FIGURES 10, 11 and 12 the cross-sectional view of the internal profile and the profile view of the angled trunnions already screwed in each one of these systems.

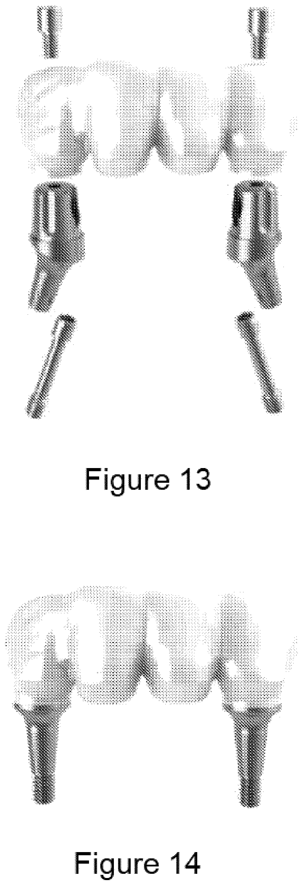

The coupling of the prosthesis to the "SCREWED ANGLED TRUNNION" is shown in the assembly sequence in FIGURES 13, 14, 15 and 16. The assembly example used was of the prosthesis in the prosthesis elements, the MT (Morse Taper) fitting, for example. Any other systems could be used for said assembly.

FIGURE 13 shows a multiple prosthesis in coupling position, with the use of two SCREWED ANGLED TRUNNIONS and already coupled to the SCREWED ANGLED TRUNNIONS in FIGURE 14.

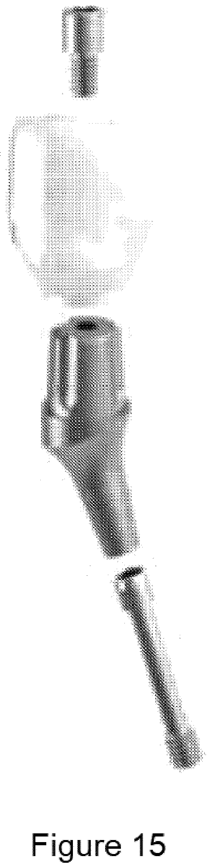

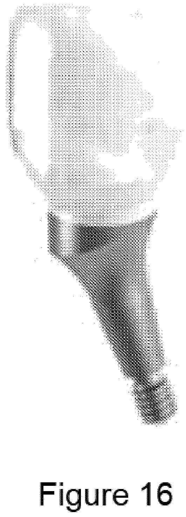

FIGURE 15 shows a unitary prosthesis in coupling position to the "SCREWED ANGLED TRUNNION" and already coupled to the "SCREWED ANGLED TRUNNION" in FIGURE 16.

As already mentioned, **"THE SCREWED ANGLED TRUNNION"** is made of grade 1, 2, 4, or 5 titanium, and can also be produced of any other material as may be used in a dental prosthesis component in the production process. The main difference in relation to the angled trunnions used is the existence of an "inner thread" in the upper part of the trunnion, as described in FIGURES 4, 5 and 6 detail "A", "B" and "C" respectively. All these drawings show the inner thread in the upper part for **"THE SCREWED ANGLED TRUNNION",** where the prosthesis (tooth or set of teeth) will be screwed as described in the assembly sequence in FIGURES 7, 8, and 9. Although the development of the inner thread is the object of the Utility Model patent now filed, **"THE SCREWED ANGLED TRUNNION"** still has its previous function, if necessary, which is the cementing/gluing of the prosthesis. What is offered in the present Utility Model is the possibility of screwing the prosthesis (tooth or set of teeth), with the applications already described above.

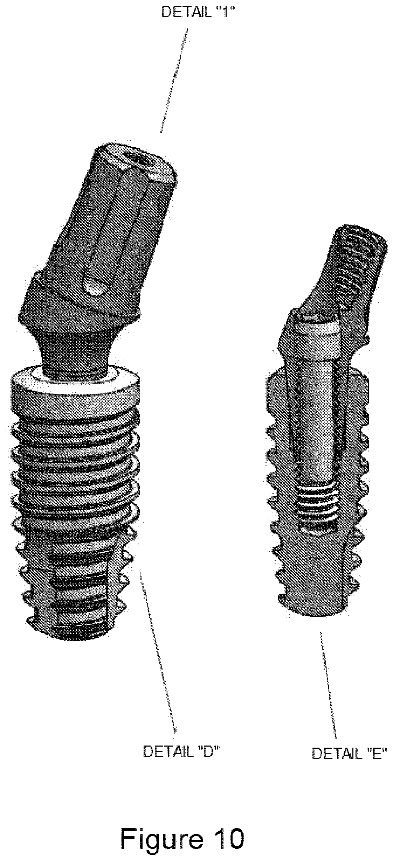

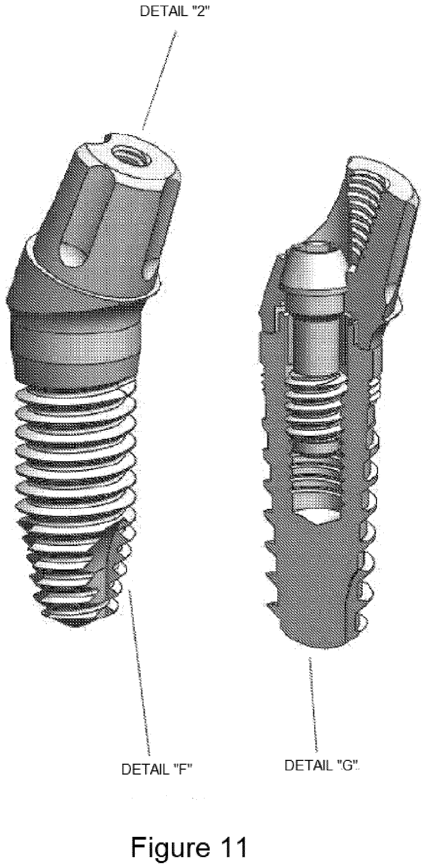

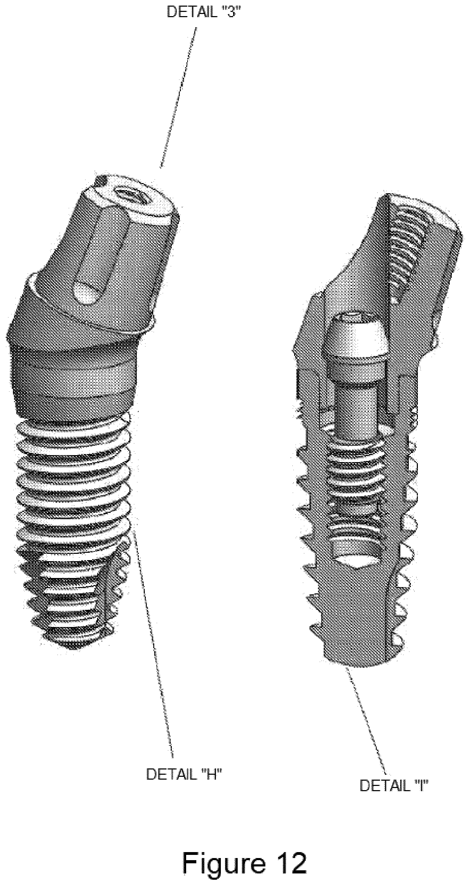

The process of choosing and placing the prosthesis element begins once the implant is placed and in accordance with the choice of the specialist who may await bone bonding of the implant before installing **"THE SCREWED ANGLED TRUNNION"** or place it on the same day as the implant. In FIGURES 10, 11 and 12, the details "D", "F" and "H" show the implant (where **"THE SCREWED ANGLED TRUNNION"** will be coupled) and **"THE SCREWED ANGLED TRUNNION",** *per se* with the details (details 1, 2 and 3) where the prostheses will be coupled to the prosthesis elements which in this case is **"THE SCREWED ANGLED TRUNNION".**

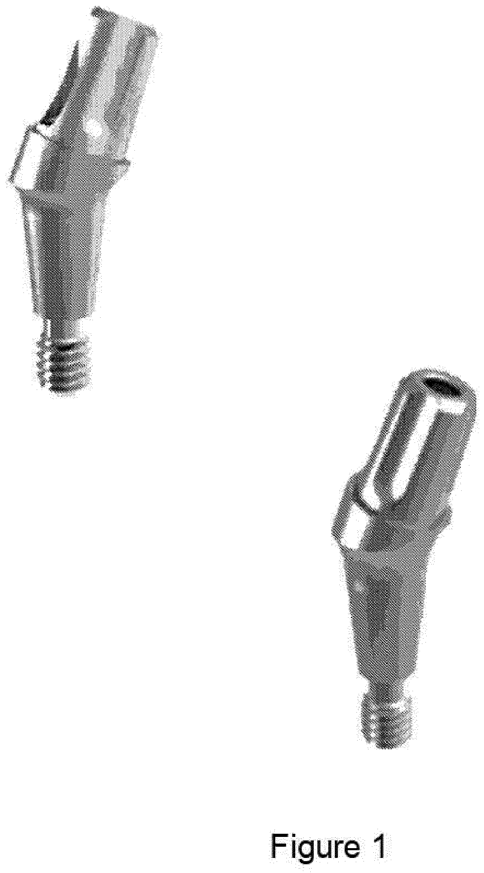

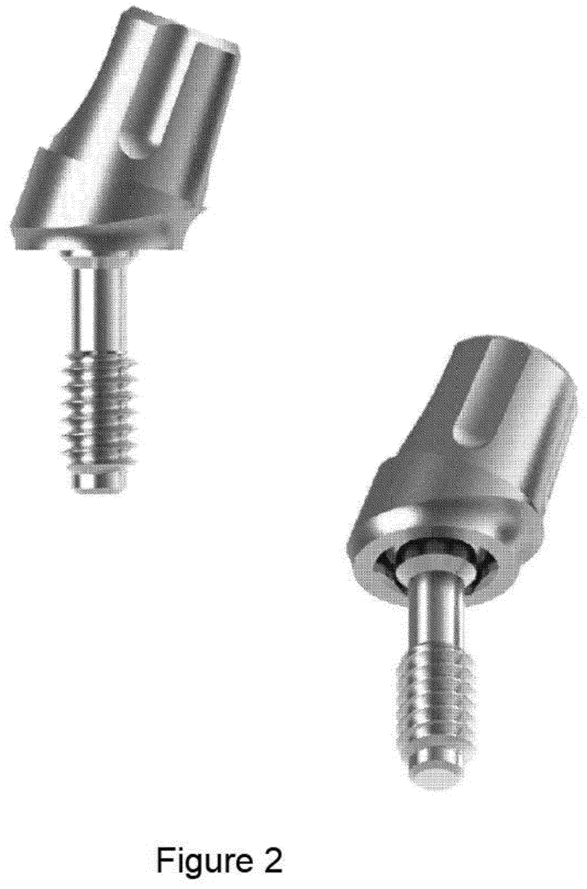

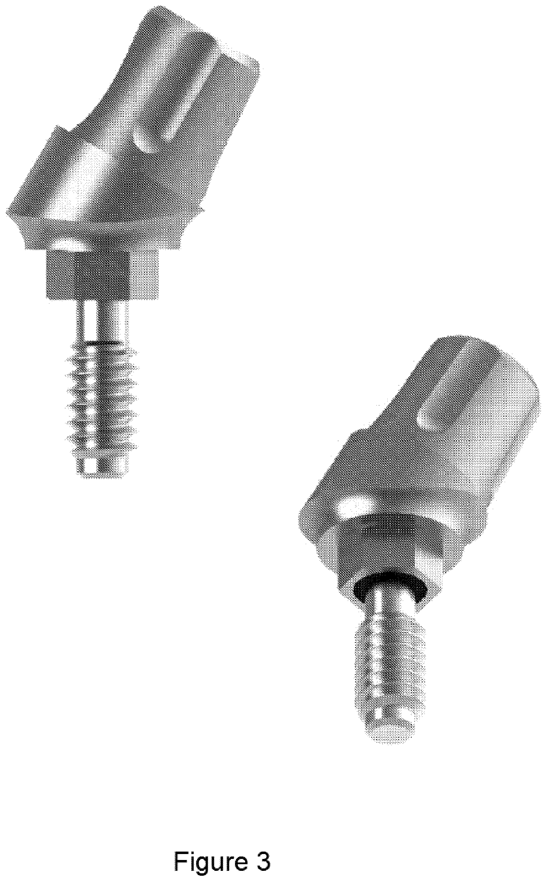

In FIGURES 10, 11 and 12, the details "E", "G" and "I" cross-sectionally illustrate how the prosthesis element **("THE SCREWED ANGLED TRUNNION")** is coupled to the implant in the three systems most used, namely Morse Taper (MT), FIGURE 1, External Hexagon (EH), FIGURE 2 and Internal Hexagon (IH), FIGURE 3. FIGURES 13, 14 and 15 illustrate how the prosthesis is coupled to the prosthesis elements which in this case is **"THE SCREWED ANGLED TRUNNION".**

## Claims

1. **Angled trunnion, characterized by** the possibility of fastening the prosthesis by screwing.

2. **The angled trunnion** according to claim 1, **characterized by** the presence of an angled inner thread applied to its upper part.

3. **The angled trunnion** according to claims 1 or 2, **characterized by** having the Morse Taper, External Hexagon or Internal Hexagon fitting options.

4. **The angled trunnion** according to claims 1, 2 or 3, **characterized by** allowing the type of fastening the prosthesis by gluing or cementing.
